# EUROPÄISCHE PATENTSCHRIFT

(11) **EP 0 653 177 B1**
(45) Veröffentlichungstag und Bekanntmachung des Hinweises auf die Patenterteilung: **28.08.1996**
(21) Anmeldenummer: 94810605.9
(22) Anmeldetag: 19.10.1994
(51) Int. Cl.: A47J 31/40, G07F 9/10

(54) **Verfahren zur Zubereitung eines Kaffeegetränks durch Aufbrühen einer auf einem Transportband angeordneten Kaffeepulver-Portion sowie Kaffeemaschine zur Durchführung des Verfahrens**
Method for brewing a coffee beverage by using a portion of coffee powder which is disposed on a conveyor and coffee machine for performing the method
Méthode pour préparer un café en utilisant une portion de café en poudre disposée sur un convoyeur, et machine pour la mise en oeuvre de cette méthode

(30) Priorität: 14.11.1993 DE 4338629
(43) Veröffentlichungstag der Anmeldung: 17.05.1995
(73) Patentinhaber: COSMEC S.r.l., I-24059 Urgnano, Bergamo (IT)
(72) Erfinder: Ackermann, Anton, CH-4855 Wolfwil (CH)
(74) Vertreter: Rottmann, Maximilian R.

(56) Entgegenhaltungen:
- EP-A- 0 041 657
- EP-A- 0 199 953
- EP-A- 0 457 708
- WO-A-93/20737
- US-A- 3 327 613
- US-A- 4 008 657

## Beschreibung

Die Erfindung betrifft eine Kaffeemaschine zur Zubereitung eines Kaffeegetränks durch Aufbrühen einer Portion gemahlenen Kaffees in einer zweiteiligen Brühkammer nach dem Oberbegriff des Anspruchs 1 sowie ein Verfahren zur Zubereitung eines Kaffeegetränks nach dem Oberbegriff des Anspruchs 25.

Bekannt sind vollautomatische Espresso-Kaffeemaschinen, welche durch Aufbrühen von in einer Brühkammer aufgenommenem, gemahlenem Kaffee ein Kaffeegetränk zubereiten. Solche Kaffeemaschinen verfügen in der Regel über ein integriertes Mahlwerk zum Mahlen von Kaffeebohnen. Derartige Kaffeemaschinen funktionieren im allgemeinen gut, sind jedoch durch das integrierte Mahlwerk und die dazugehörige, aufwendige Mechanik in der Herstellung teuer.

Ein weiterer Nachteil solcher Kaffeemaschinen ist die relativ geringe Kadenz, mit der Kaffeegetränke zubereitet werden können. Diese Kadenz wird nicht zuletzt durch den zeitintensiven Mahlvorgang negativ beeinflusst. Somit eignen sich solche Kaffeemaschinen nur bedingt für Einsatzgebiete, in denen eine grosse Anzahl Kaffeegetränke pro Zeiteinheit gefordert wird.

Das Mahlwerk hat zudem einen entscheidenden Einfluss auf die Qualität und das Aussehen des fertigen Kaffeegetränks, da durch das Mahlwerk die Korngrösse und Masshaltigkeit des gemahlenen Kaffees bestimmt wird. Die Korngrösse und Masshaltigkeit wiederum sind entscheidende Kriterien für die Durchlaufgeschwindigkeit des Brühwassers durch das in der Brühkammer aufgenommene, verdichtete Kaffeepulver. Da in solchen Kaffeemaschinen bevorzugt Durchlauferhitzer zum Erwärmen des Wassers eingesetzt werden, beeinflusst die Durchlaufgeschwindigkeit ihrerseits die Temperatur und das Aussehen -"Espressoschäumli"- des fertigen Kaffeegetränks. Das heisst mit anderen Worten, ein schlechtes bzw. abgenutztes Mahlwerk hat einen direkten, negativen Einfluss auf die Qualität des fertigen Kaffeegetränks.

Im weiteren müssen bei derartigen Kaffeemaschinen Sensoren mit einer nachgeschalteten Elektronik zum exakten Dosieren der Kaffeemenge vorhanden sein, was sich wiederum in einem hohen Preis des Endprodukts niederschlägt.

Ein weiterer Nachteil, der gattungsgemässen Kaffeemaschinen anhaftet, besteht darin, dass das Kaffeepulver direkt mit Teilen der Kaffeemaschine in Berührung kommt, wodurch diese Teile einer starken Verschmutzung unterliegen.

Aus vorgängig geschilderten Gründen wäre es daher wünschenswert, wenn eine Kaffeemaschine vorbereitete Portionen von gemahlenem Kaffee, welche in einer wasserdurchlässigen Umhüllung aufgenommen sind, verarbeiten könnte. Dadurch würden die zuvor geschilderten Nachteile weitgehend vermieden.

Aus der EP-A-0 041 657 ist eine Espressomaschine gemäß dem oberbegriff des Anspruchs 1 bekannt, welche solche vorportionierten Portionen von gemahlenem Kaffee zum Aufbrühen eines Kaffeegetränks verwendet. Die Kaffeeportionen sind auf einem Band angeordnet und werden mittels einer vor und einer nach der Brühkammer angeordneten Transportrolle bewegt und der Brühkammer zugeführt, in welcher anschliessend das Kaffeegetränk aufgebrüht wird. Die frischen Kaffeeportionen sind in einem dafür vorgesehenen, ersten Behälter aufbewahrt, währenddem die ausgelaugten Portionen einem zweiten Behälter zugeführt werden. Aus der einzigen Zeichnung dieser Patentschrift ist weder ersichtlich, ob eine kraftschlüssige Verbindung zwischen der Transportrolle und dem Band besteht, noch wie der Anfang des Bandes in die Kaffeemaschine bzw. in deren Transportorgan eingeführt wird. Ersichtlich ist lediglich, dass beim Aufbrühen eines Kaffeegetränks jeweils die zwei auf die in der Brühkammer aufgenommene Kaffeeportion nachfolgenden Kaffeeportionen nicht mehr im ersten Behälter aufgenommen sind. Das bedeutet, dass zumindest diese zwei Kaffeeportionen, insbesondere bei langen Aufbereitungsintervallen, ihr Aroma verlieren. Da auch nicht ersichtlich ist, wie der Bandanfang vom Transportorgan erfasst wird, muss angenommen werden, dass das Einführen des Transportbandanfanges von Hand erfolgt. Zudem muss zumindest eine Kaffeeportion in den Bereich der hinter der Brühkammer angeordneten Transportrolle gebracht werden, wodurch diese, und wahrscheinlich auch noch die nächst folgende Kaffeeportion, nach der Brühkammer zu liegen kommen und dadurch nicht aufgebrüht werden können. Dies führt natürlich zu einer unnötigen Verteuerung einer solchen Kaffeepackung in Bezug auf die Anzahl der aufbrühbaren Kaffeegetränke. Zwischen den einzelnen Kaffeeportionen muss zudem ein relativ grosser Abstand vorhanden sein, damit nur jeweils eine Kaffeeportion in den Bereich der Brühkammer zu liegen kommt und der ganze Einzieh- und Aufbrühvorgang auf diese Weise zufriedenstellend funktioniert. Dies wiederum bedeutet, dass durch das Band selbst relativ viel Platz im Behälter eingenommen und die ganze Packung verteuert wird. Aus erwähnter Darstellung ist ausserdem auch nicht ersichtlich, wie die exakte Positionierung einer einzelnen Kaffeeportion in der Brühkammer erfolgt.

Ein weiterer Nachteil dieser Kaffeemaschine besteht darin, dass immer das gesamte Band bzw. die darauf angeordneten Kaffeeportionen verbraucht werden müssen, bevor ein neues Band mit gegebenenfalls anderen Kaffeeportionen verwendet werden kann.

Aus der US-A-3 327 613 ist ein Getränkeaufbrühapparat bekannt, welcher als Kaffeemaschine verwendbar ist und auf einem Band angeordnete Portionen gemahlenen Kaffees zum Aufbrühen eines Kaffeegetränks in einer Brühkammer verwenden kann. Das Bewegen des Bandes erfolgt durch zwei über ein Getriebe miteinander gekoppelte Transportorgane. Diese Transportorgane bestehen aus dreieckigen Prismen, in welche auf jeder Seite eine Kavität zur Aufnahme einer Kaffeeportion eingelassen ist. Das eine Transportprisma ist vor der Brühkammer und das andere dahinter angeordnet. Beide Transportprismen weisen Indexierstifte auf, welche in am Band eingelassene Öffnungen eingreifen. Im weiteren sind zwei Behälter vorgesehen, wovon der eine das Band mit den frischen Kaffeeportionen aufnimmt, währenddem der andere die ausgelaugten Kaffeeportionen mit dem zugehörigen Band aufnimmt.

Nachteilig bei diesem Getränkeapparat ist, dass immer mehrere Kaffeeportionen der Luftfeuchtigkeit ausgesetzt sind, und dass immer alle auf dem Band angeordneten Kaffeeportionen verbraucht werden müssen, bevor ein neues Band, auf welchem gegebenenfalls andere Kaffeeportionen angeordnet sind, verwendet werden kann. Zudem ist der Transportmechanismus durch zwei über ein kompliziertes Getriebe miteinander verbundene Transportorgane aufwendig und entsprechend teuer in der Herstellung.

Der erwähnten US-A-3 327 613 ist zudem ebenfalls nicht zu entnehmen, wie das Erfassen des Transportbandanfanges vonstatten geht. Aller Wahrscheinlichkeit nach muss die erste Kaffeeportion von Hand in die Kavität des hinter der Brühkammer liegenden Transportorgans eingebracht werden, damit ein Transport der nachfolgenden Kaffeeportionen in die Brühkammer überhaupt möglich ist. Dies bedeutet jedoch, dass die vorderste auf dem Transportband angeordnete Kaffeeportion nicht zum Aufbrühen eines Kaffeegetränks verwendet werden kann.

Zusammenfassend kann gesagt werden, dass den bekannten Kaffeemaschinen der eingangs genannten Art, welche auf einem Band angeordnete Portionen gemahlenen Kaffees zum Aufbrühen des Kaffeegetränks verwenden, der Nachteil anhaftet, dass immer mehrere Kaffeeportionen gleichzeitig bewegt werden müssen, so dass immer mehrere Kaffeeportionen ausserhalb des Behältnisses liegen. Diese Kaffeeportionen sind dadurch der Luftfeuchtigkeit ausgesetzt, oxydieren und verlieren somit ihr Aroma. Das Einführen des Transportbandanfanges muss jeweils von Hand erfolgen, wobei zumindest die erste auf dem Transportband angeordnete Kaffeeportion nicht für einen Aufbrühvorgang verwendet werden kann. Bei diesen bekannten Kaffeemaschinen müssen zudem sämtliche auf dem Transportband angeordneten Kaffeeportionen aufgebrüht werden, bevor ein neues bzw. anderes Band verwendet werden kann. Dadurch ist es beispielsweise nicht möglich, bei Verwendung von normalerweise koffeinhaltigem Kaffeepulver zwischendurch ein koffeinfreies Kaffeegetränk aufzubrühen.

Es ist somit die Aufgabe der Erfindung, eine Kaffeemaschine derart auszubilden, dass einzelne, im Behältnis aufgenommene Kaffeepulver-Portionen vollautomatisch erfasst und der Brühkammer zugeführt werden können, wobei auch zwischendurch ein Wechsel zwischen verschiedenen Kaffeesorten bzw. -Arten ermöglicht werden soll.

Diese Aufgabe wird durch eine Kaffeemaschine mit dem im Anspruch 1 definierten Merkmalen gelöst.

Eine weitere Aufgabe der Erfindung besteht darin, ein Verfahren zum Zuführen von auf einem Transportband angeordneten Kaffeepulver-Portionen zur Aufbrühstation anzugeben, bei dem die jeweilige für den Aufbrühvorgang benötigte Kaffeepulver-Portion, auch bei langen Aufbereitungsintervallen, bis zu ihrem Aufbrühen frisch bleibt, d.h. nicht der Luftfeuchtigkeit ausgesetzt wird.

Diese Aufgabe wird durch das im Anspruch 15 definierte Verfahren gelöst.

Bevorzugte Ausführungen der Kaffeemaschine sind in den Ansprüchen 2 bis 24 angegeben. Bevorzugte Verfahrensschritte sind in den Ansprüchen 26 und 27 umschrieben.

Das im Anspruch 25 umschriebene Verfahren ermöglicht erstmals, dass eine auf einem Transportband angeordnete Kaffeepulver-Portion im Aufbewahrungsbehälter erfasst und einzeln aus diesem entnommen wird, wobei die restlichen Kaffeepulver-Portionen weiterhin im Behälter verbleiben und ihr Aroma behalten.

Bei einem bevorzugten Verfahren ist vorgesehen, dass der hinter der entnommenen Kaffeeportion liegende, abgetrennte Transportbandabschnitt in dessem neu entstandenen Anfangsbereich, im Bereich der Behälteröffnung, fixiert wird. Somit wird der Anfang des abgetrennten Transportbandabschnitts wieder in einer definierten Position fixiert, wodurch dessen nachfolgendes Erfassen wesentlich vereinfacht wird.

Um das Verfahren durchzuführen, ist eine Kaffeemaschine gemäß Anspruch 1 vorgesehen, welche einen drehbaren Brühkammerteil und ein mit diesem Brühkammerteil gekoppeltes, das Transportband im Anfangsbereich erfassendes Mitnehmerorgan aufweist. Dadurch ist die Voraussetzung für das automatische Erfassen und anschliessende Weitertransportieren des Transportbandes mit einer darauf angeordneten Kaffeepulver-Portion zur Brühkammer geschaffen.

Eine bevorzugte Ausführungsform der Kaffeemaschine sieht eine Baugruppe, bestehend aus einem ortsfesten Aussenteil und darin geführtem, drehbaren Brühkammerteil, einem Mitnehmerorgan sowie einem Antriebsorgan vor. Eine solche Baugruppe ermöglicht eine kompakte Bauweise der Kaffeemaschine und ist zudem leicht austauschbar.

Bei einer weiteren, bevorzugten Ausführung der Kaffeemaschine sind Befestigungsorgane zum positionsbestimmten Ankoppeln des Behälters oder einen Bandabschnitt fixierender Elemente vorgesehen. Durch ein positionsbestimmtes Ankoppeln des Behälters bzw. der den Bandabschnitt fixierenden Elemente ist die Lage des Transportbandabschnittes bzw. des Transportbandanfanges festgelegt, so dass mit dem Befestigen des Behälters bzw. der Elemente auch gleichzeitig der Transportbandanfang in eine vorbestimmte Position gebracht wird.

Nachfolgend wird ein Ausführungsbeispiel der Erfindung anhand von Zeichnungen näher erläutert. In den Zeichnungen zeigen:
- Fig. 1 bis 8: eine schematische Darstellung der Kaffeemaschine mit den wichtigsten Bauteilen während der verschiedenen Phasen eines Getränkezubereitungszyklus; und
- Fig. 9 bis 16: die im Zusammenhang mit der Erfindung wesentlichen Einzelteile der Kaffeemaschine in detaillierten Darstellungen.

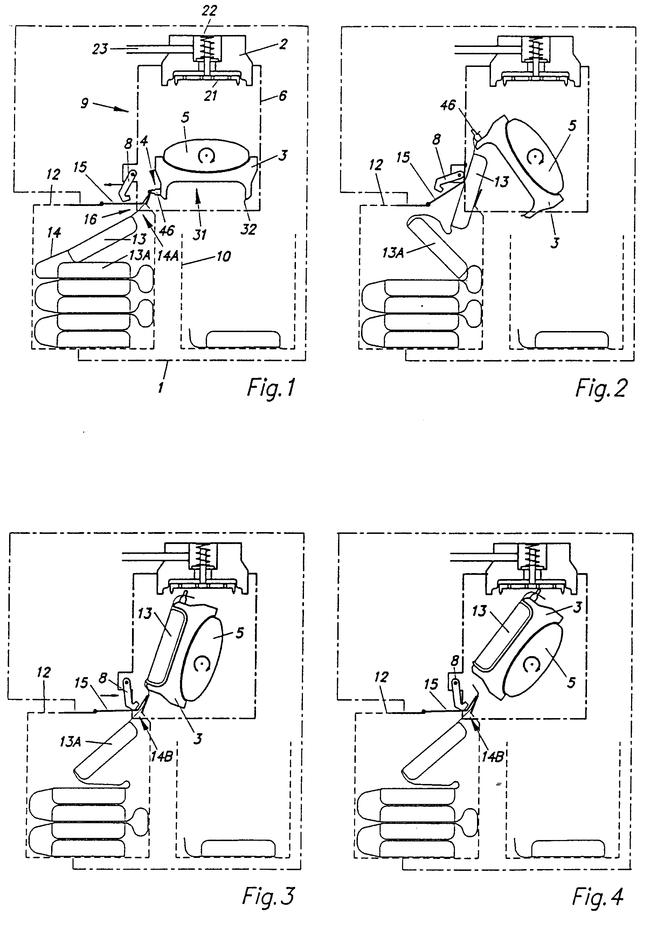

In den Fig. 1 bis 8 ist schematisch eine Kaffeemaschine 1 während verschiedener Phasen eines Getränkezubereitungszyklus dargestellt. Anhand dieser Figuren werden nachfolgend die wichtigsten Bauteile der Kaffeemaschine 1 sowie einzelne Verfahrensschritte zur Zubereitung eines Kaffeegetränkes erläutert. Zugunsten einer übersichtlichen Darstellung sind bekannte und nicht in unmittelbarem Zusammenhang mit der Erfindung stehende Bauteile der Kaffeemaschine 1 nicht eingezeichnet. Die hier dargestellten Bauteile der Kaffeemaschine 1 sind ein Brühkammeroberteil 2 sowie ein Brühkammerunterteil 3, ein Mitnehmerorgan 4, eine Antriebswelle 5, ein Aussenteil 6, ein Verschlussbügel 8, ein Behälter 12 zur Aufnahme von frischen Portionen 13, 13A gemahlenen Kaffees, welche durch ein Transportband 14 miteinander verbunden sind, sowie ein Abfallbehälter 10 zur Aufnahme von ausgelaugten Kaffeeportionen 13B.

Der Brühkammerunterteil 3, das Mitnehmerorgan 4 sowie die Antriebswelle 5 sind im ortsfesten Aussenteil 6 beweglich gelagert und zu einer Baugruppe 9 zusammengefasst. Der Brühkammeroberteil 2 ist fest mit dem Aussenteil 6 verbunden und weist ein durch eine Feder 22 vorgespanntes und mit Durchlässen versehenes Ventil 21 auf. In den Brühkammerunterteil 3 ist, in Brühstellung gesehen, auf dessen Oberseite eine Vertiefung 31 in Form einer Brühmulde eingelassen und ein Durchtrennorgan 32 angeformt. Das Mitnehmerorgan 4 ist mit dem Brühkammerunterteil 3 gekoppelt, wobei der Brühkammerunterteil 3 über eine Formschlussverbindung mit der Antriebswelle 5 verbunden und durch diese angetrieben ist. Die Antriebswelle 5 ist im Querschnitt oval ausgebildet und mit einem nicht dargestellten Antriebsmotor gekoppelt. Um die Position des Brühkammerunterteils 3 feststellen zu können, sind zwei unterschiedlich gepolte Magnete am Brühkammerunterteil 3 und eine in der Lage korrespondierende Hallsonde am Aussenteil 6 angebracht. Diese Elemente sind ebenfalls nicht eingezeichnet. Das Transportband 14 weist im Anfangsbereich 14A, 14B und jeweils zwischen zwei Kaffeeportionen 13, 13A aus dieser Darstellung nicht ersichtliche Aussparungen zum Fixieren, Erfassen und Bewegen auf. Zudem ist das Transportband 14 jeweils zwischen zwei Kaffeeportionen 13, 13A mit einer Perforation versehen. Der Behälter 12 mit den frischen Kaffeeportionen 13, 13A weist zudem einen federbelasteten Verschlussdeckel 15 auf. Um das Transportband 14 im Anfangsbereich 14A, 14B in einer definierten Position zu halten, wird dieses durch am Verschlussdeckel 15 angebrachte Nocken an den Aussparungen fixiert.

In den Aussenteil 6 sind aus den Figuren 1 bis 8 nicht ersichtliche Führungsnuten eingelassen, welche der Führung des Brühkammerunterteils 3 sowie des Mitnehmerorgans 4 dienen. Dazu weisen sowohl der Brühkammerunterteil 3 wie auch das Mitnehmerorgan 4 in den Nuten geführte Nocken bzw. Zapfen auf.

In der Fig. 1 ist der Ausgangszustand der Kaffeemaschine 1 dargestellt. Dazu ist der Behälter 12 mit den frischen Kaffeeportionen 13, 13A in einer vorbestimmten Position an der Kaffeemaschine 1 befestigt. Der Brühkammerunterteil 3 ist durch die Antriebswelle 5 mit der Vertiefung 31 nach unten gedreht. In dieser Position greifen am Mitnehmerorgan 4 angebrachte Stifte 46, durch Schlitze im Verschlussdeckel 15, in die Aussparungen des Transportbandes 14, 14A ein. Der durch den Brühkammerunterteil 3 betätigte Verschlussbügel 8 ist etwas nach links verschwenkt, so dass der Verschlussdeckel 15 geöffnet werden kann. Wird nun der untere Brühkammerteil 3 zusammen mit dem Mitnehmerorgan 4 durch die Antriebswelle 5 im Uhrzeigersinn gedreht, so wird die oberste, erfasste Kaffeeportion 13 nach oben gezogen und dadurch der Verschlussdeckel 15 geöffnet. Dieser Zustand ist in einer Momentaufnahme in der Fig. 2 dargestellt.

Durch ein Weiterdrehen des Brühkammerunterteils 3 und des Mitnehmerorgans 4 wird die oberste Kaffeeportion 13 zuerst ganz aus dem Behälter 12 heraus- und anschliessend durch die Schwerkraft in die Vertiefung 31 gezogen. Der Verschlussbügel 8 wird danach zwangsweise nach rechts verschwenkt, wodurch der Verschlussdeckel 15, zusätzlich zur Wirkung der Federkraft, verschlossen wird. Dieser Zustand ist aus der Fig. 3 ersichtlich. Das Schliessen des Verschlussdeckels 15 ist zeitlich so abgestimmt, dass durch ihn das Transportband 14, 14B an den vorhandenen Aussparungen fixiert wird. Dazu dienen am Verschlussdeckel 15 angeformte Nocken, welche in die Öffnungen des Transportbandes 14, 14B eingreifen. Werden nun der Brühkammerunterteil 3 und das Mitnehmerorgan 4, wie aus der Figur 4 in einer Momentaufnahme ersichtlich, weitergedreht, so kommt es zu einem Abreissen des Transportbandes 14 an dessen Perforation. Um diesen Abreissvorgang zu unterstützen, ist am Brühkammerunterteil 3, auf der dem Mitnehmerorgan 4 gegenüberliegenden Seite, das Durchtrennorgan 32 angeformt.

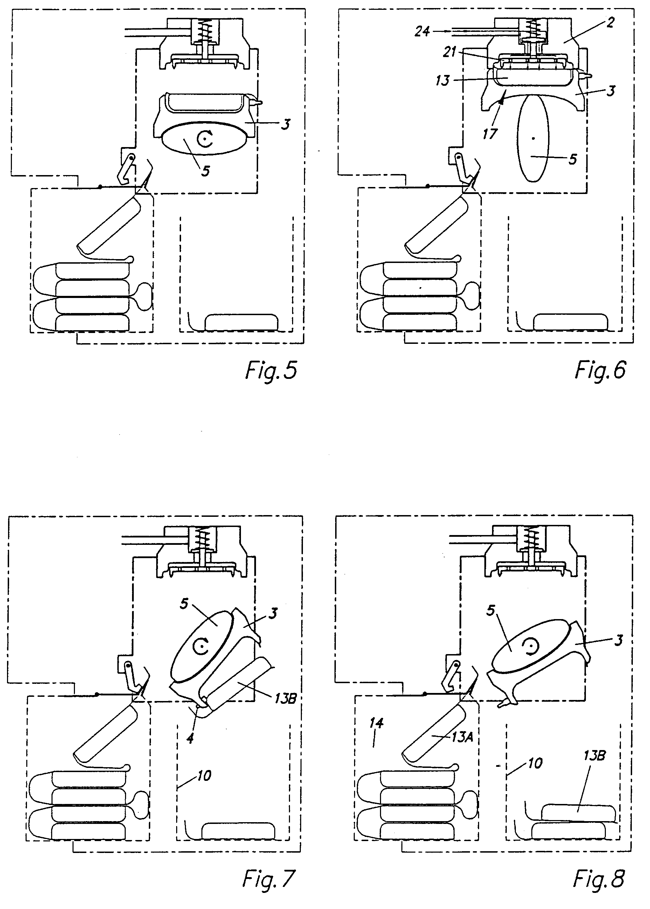

Aus der Fig. 5 ist der Brühkammerunterteil 3 in der nach oben gedrehten, horizontalen Position der Vertiefung 31 ersichtlich. Aus dieser Position werden die Führungszapfen des Brühkammerunterteils 3 durch zwei am Aussenteil 6 drehbar angebrachte Hebel in vertikal nach oben verlaufende Nuten im Aussenteil 6 geführt. Bei einem Weiterdrehen der Antriebswelle 5 löst sich daher die formschlüssige Verbindung zwischen der Antriebswelle 5 und dem Brühkammerunterteil 3, so dass letzterer, durch die ovale Formgebung der Antriebswelle 5, eine nach oben gerichtete Vertikalbewegung ausführt.

In der Fig. 6 ist die Antriebswelle 5 in einer gegenüber der Fig. 5 um 90° weitergedrehten Stellung dargestellt. In dieser Stellung nimmt der Brühkammerunterteil 3 seine oberste Stellung ein, in welcher er dichtend an den Brühkammeroberteil 2 zu liegen kommt. Kurz bevor der Brühkammerunterteil 3 seine oberste Stellung erreicht hat, fällt der den Brühkammerunterteil 3 in die vertikalen Nuten führende Hebel in seine Ausgangsstellung zurück, wodurch der Brühkammerunterteil 3, nach dem Herunterbewegen, in seiner Führungsnut weitergedreht werden kann. Somit wird durch die beiden Brühkammerteile 2, 3 die eigentliche Brühkammer 17 gebildet bzw. verschlossen. In dieser Brühstellung kommt der eine, am Brühkammerunterteil 3 angeordnete Magnet unmittelbar vor die Hallsonde zu liegen, wodurch diese ein Signal empfängt. Anhand der Polarität des Magneten kann eine nachgeschaltete Elektronik die Position des Brühkammerunterteils 3 feststellen, bzw. ermitteln, dass sich diese in der Brühstellung befindet. Somit wird nun die Drehbewegung des Antriebsmotors und damit der Antriebswelle 5 gestoppt und der Aufbrühvorgang gestartet.

In der letzten Phase der nach oben gerichteten Bewegung des Brühkammerunterteils 3 wird das Brühwasserzulauf-Ventil 21, durch die in der Vertiefung 31 des Brühkammerunterteils 3 aufgenommene Kaffeeportion 13, entgegen der Kraft der Feder 22 nach oben gedrückt und dadurch der Brühwasserzulauf freigegeben. Der Aufbrühvorgang selber ist durch einen das Brühwasser symbolisierenden Pfeil 24 angedeutet. Das Brühwasser kann über im Brühwasserzulauf-Ventil 21 vorhandene Durchlässe in die Brühkammer 17 gelangen und die darin aufgenommene Kaffeepulver-Portion 13 aufbrühen. Über nicht eingezeichnete, mit dem Bühkammerunterteil 3 in der Brühstellung gekoppelte Auslaufleitungen strömt das frisch aufgebrühte Kaffeegetränk zu einem Getränke-Auslass.

Um zu der in Fig. 7 eingezeichneten Position zu gelangen, wird die Antriebswelle 5 nach dem Brühvorgang im Uhrzeigersinn weitergedreht. Dadurch bewegt sich der Brühkammerunterteil 3 durch die Schwerkraft, unterstützt durch Federkraft, nach unten. Sobald die Antriebswelle 5 eine gegenüber der Fig. 6 um 90° weitergedrehte Position eingenommen hat, legt sich der Brühkammerunterteil 3 wieder formschlüssig an die Antriebswelle 5 an. Beim Weiterdrehen der Antriebswelle schwenkt der Brühkammerunterteil 3 und damit die Vertiefung 31 nach unten, wodurch sich die ausgelaugte Kaffeepulver-Portion 13B, der Schwerkraft folgend, aus dem Brühkammerunterteil 3 löst und nach unten in den Abfallbehälter 10 fällt. Um die ausgelaugte Kaffeepulver-Portion 13B bzw. deren Transportbandabschnitt während dieser Phase nicht mehr am Mitnehmerorgan 4 zu fixieren, wird das Mitnehmerorgan 4 etwas zurückgezogen, was vorzugsweise durch eine entsprechende Ausgestaltung der Führungsnuten in diesem Bereich bewerkstelligt wird.

Mit der Fig. 8 ist schliesslich noch der Ruhezustand dargestellt, den das Mitnehmerorgan 4 und der Brühkammerunterteil 3 einnehmen, bevor ein neuer Transportbandabschnitt mit der darauf angeordneten Kaffeepulver-Portion 13A erfasst wird. Die Position des Brühkammerunterteils 3 wird wiederum über die Hallsonde erfasst und die Drehbewegung der Antriebswelle 5 durch Anhalten des Antriebsmotors gestoppt. Diese Stellung wird solange beibehalten, bis der Befehl zum Zubereiten eines neuen Kaffeegetränks gegeben wird. In der Ruhestellung kann der Behälter 12 entfernt oder fixiert werden, ohne dass das Mitnehmerorgan 4 in dessen Befestigungsbereich ragt.

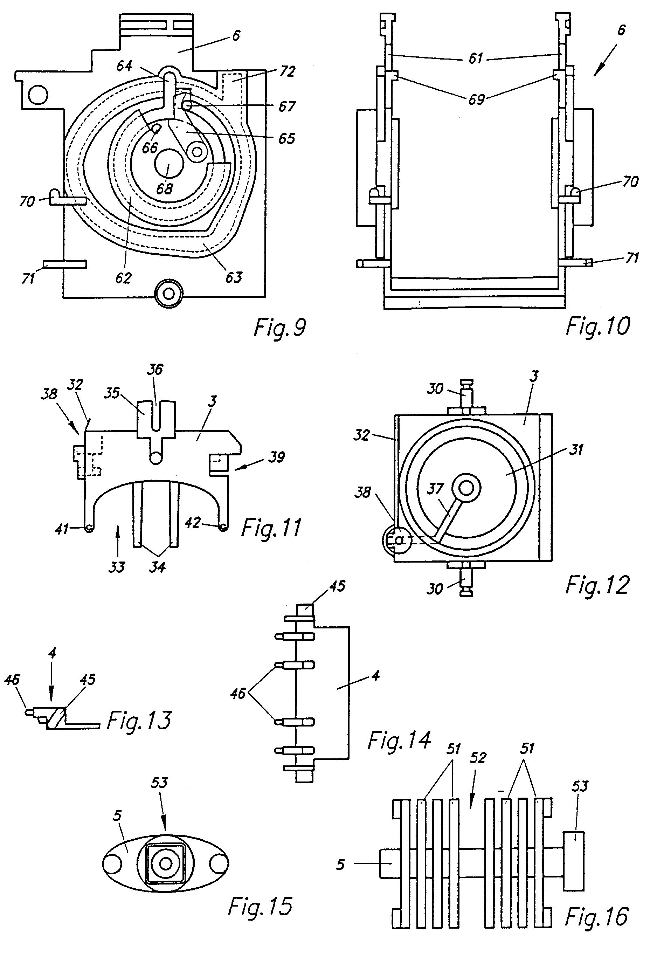

In den Fig. 9 bis 12 sind der Aussenteil 6, der drehbare Brühkammerunterteil 3, das Mitnehmerorgan 4 sowie die Antriebswelle 5 in detaillierten Ansichten dargestellt. Anhand dieser Figuren werden nur die im Zusammenhang mit der Erfindung wesentlichen Ausbildungsmerkmale erläutert. Für die Erfindung unwichtige Merkmale sind zum Teil nicht eingezeichnet oder werden nicht beschrieben.

Fig. 9 zeigt den Aussenteil 6 bzw. eine Seitenwand davon in einer Seitenansicht, währenddem Fig. 10 den Aussenteil 6 in einer Frontalansicht zeigt. In die Seitenteile 61 sind je zwei Führungsbahnen 62, 63 eingelassen, wovon die eine, innere Führungsbahn 62 zumindest annähernd kreisförmig ausgebildet ist, währenddem die äussere Führungsbahn 63 eine unregelmässige Form aufweist. Am oberen Totpunkt weist die innere Führungsbahn 62 zudem eine vertikal nach oben gerichtete Führungsnut 64 auf. Die äussere Führungsbahn 63 weist ebenfalls eine vertikal nach oben verlaufende Nut 72 auf, welche gegenüber der ersten Nut 64 seitlich versetzt ist. An beiden Innenseiten der Seitenteile 61 ist je ein vorstehender Führungszapfen 69 angeformt, währenddem an beiden Aussenseiten zudem noch ein Hebel 65 drehbar angebracht ist. Die beiden Seitenteile 61 weisen stirnseitig je zwei Befestigungsorgane 70, 71 zum Fixieren des Behälters mit den frischen Kaffeepulver-Portionen auf. In beide Seitenwände 61 ist ausserdem eine zentrale Bohrung 68 zur Lagerung der Antriebswelle 5 eingelassen.

Die Fig. 11 und 12 zeigen den drehbaren Brühkammerunterteil 3 in einer Seiten- und in einer Draufsicht. Auf seiner Oberseite ist eine Vertiefung 31 in den Brühkammerunterteil 3 eingelassen, währenddem er auf der Unterseite eine Ausnehmung 33 sowie zwei vertikal abstehende Führungsstege 34 aufweist. Auf der einen Seite der als Brühmulde ausgebildeten Vertiefung 31 ist das Durchtrennorgan 32 in Form einer Messerleiste angedeutet. Um ein sicheres Abtrennen des Transportbandes zu gewährleisten, ist die Messerleiste 32 entlang der Schnittkante schräg oder dachförmig ausgestaltet. Vom tiefsten Punkt der Brühmulde führt ein Kanal 37 zu einem als Kupplung 38 ausgebildeten Auslass. Auf der dem Auslass gegenüberliegenden Stirnseite ist eine Aussparung 39 zur Aufnahme des Mitnehmerorgans 4 vorgesehen. An der Oberseite weist der Brühkammerunterteil 3 zu beiden Seiten je eine mit Längsschlitzen 36 versehene Führungsplatte 35 sowie zwei davon abstehende Führungszapfen 30 auf.

Das in den Fig. 13 und 14 in einer Seitenansicht und in einer Draufsicht dargestellte Mitnehmerorgan 4 ist im wesentlichen schieberförmig ausgebildet. Auf der einen Stirnseite sind Stifte 46 angeformt, währenddem an beiden Längsseiten je ein Führungsnocken 45 ausgebildet ist.

Schliesslich ist aus den Fig. 15 und 16 noch die Antriebswelle 5 in einer Seiten- und in einer Draufsicht ersichtlich. Diese Antriebswelle 5 ist aus einzelnen Segmenten 51 mit im wesentlichen ovalem Querschnitt zusammengesetzt. Die Form dieser Segmente 51 korrespondiert dabei mit der auf der Unterseite des Brühkammerunterteils 3 vorhandenen Ausnehmung 33. In der Mitte der Antriebswelle 5 ist zudem eine Aussparung 52 für die vertikalen Führungsstege 34 des Brühkammerunterteils 3 vorgesehen. Die Antriebswelle 5 weist am einen Ende einen Kupplungsteil 53 mit einem Innenvierkant auf, mittels welchem die Antriebswelle 5 an den nicht dargestellten Antriebsmotor angekoppelt werden kann.

Um die vorgängig erläuterten Bauteile zu einer Baugruppe zusammenzufügen, wird das Mitnehmerorgan 4 in die Aussparung 39 des drehbaren Brühkammerunterteils 3 gebracht und letzteres zusammen mit der Antriebswelle 5 in den Aussenteil 6 eingefügt. Die Führungszapfen 30 des drehbaren Brühkammerunterteils 3 kommen in der zumindest annähernd kreisrunden, inneren Führungsbahn 62 zu liegen, währenddem die Führungsnocken 45 des Mitnehmerorgans 4 in die unregelmässig ausgebildete, äussere Führungsbahn 63 eingreifen. Die Antriebswelle 5 wird in der zentralen Bohrung 68 des Aussenteils 6 geführt und legt sich mit ihren ovalen Segmenten 51 formschlüssig an die Ausnehmung 33 des Brühkammerunterteils 3 an. Die zwei vertikalen Stege 34 des Brühkammerunterteils 3 umfassen die Antriebswelle 5 an deren Aussparung 52 in der Mitte der Welle. Durch dieses Zusammenfügen besteht nun zwischen dem Brühkammerunterteil 3 und dem Mitnehmerorgan 4 sowie zwischen dem Brühkammerunterteil 3 und der Antriebswelle 5 eine formschlüssige Verbindung.

Um die eigentliche Funktionsweise zu erläutern, wird von einem Zustand ausgegangen, wie er auch in der Fig. 1 dargestellt ist. Der Brühkammerteil 3 ist dazu in seine Ausgangsstellung gebracht, d.h. gegenüber der Fig. 11 um 180° gedreht. In dieser Stellung steht das Mitnehmerorgan 4 gegenüber dem drehbaren Brühkammerunterteil 3 relativ weit vor, was durch den radialen Abstand zwischen der inneren, im wesentlichen kreisförmigen Führungsbahn 62 und der äusseren, unregelmässigen Führungsbahn 63 erreicht wird, da die Führungsnocken 45 und die Führungszapfen 30 des Mitnehmerorgans 4 bzw. des Brühkammerunterteils 3 in diesen Bahnen 62, 63 geführt sind. An den Befestigungsorganen 70, 71 des Aussenteils 6 ist zudem der Behälter 12 mit den darin aufgenommenen, frischen Kaffeepulver-Portionen 13 befestigt, wobei der Transportbandanfang 14A durch den Verschlussdeckel 15 in einer definierten Position fixiert ist. Das Transportband 14 weist dazu jeweils vor einer Kaffeepulver-Portion 13 Aussparungen auf, mittels welchen das Transportband 14 einerseits fixiert und mittels welchen dieses zudem auch erfasst und bewegt werden kann, indem die Stifte 46 des Mitnehmerorgans 4 durch Schlitze im Verschlussdeckel 15 in die freibleibenden Aussparungen eingreifen und dadurch das Transportband 14 formschlüssig erfassen. Sowohl der Behälter 12 wie auch das Transportband 14 und die Kaffeepulver-Portionen 13 sind in diesen Darstellungen, zugunsten einer guten Übersichtlichkeit, nicht eingezeichnet. Während der aufwärts gerichteten Drehbewegung des Brühkammerunterteils 3 wird die Kaffeepulver-Portion durch die Schwerkraft in die Vertiefung 31 des Brühkammerunterteils 3 hineingezogen und nimmt dadurch bereits eine definierte Lage ein.

Werden der Brühkammerunterteil 3 und das Mitnehmerorgan 4 mittels der Antriebswelle 5 im Uhrzeigersinn weitergedreht, so legen sich die Führungszapfen 30 des Brühkammerunterteils 3, vor dem Erreichen des oberen Totpunkts der inneren Führungsbahn 62, am drehbaren Hebel 65 an, und drehen diesen biz zu einem Anschlag 67. Dadurch kann der Brühkammerunterteil 3 nicht mehr der inneren Führungsbahn 62 folgend weitergedreht werden. Die vorgängig geschilderte Stellung des Hebels 65, in welcher dieser am Anschlag 67 ansteht, ist in der Fig. 9 eingezeichnet. Wird aus dieser Stellung die Antriebswelle 5 weitergedreht, so können die am Hebel 65 anstehenden Führungszapfen 30 nicht mehr der inneren Führungsbahn 62 folgen, sondern werden durch die ovalen Segmente 51 der Antriebswelle 5 in die vertikalen Nuten 64 geführt, da sich beim Weiterdrehen der Antriebswelle 5 die Formschlussverbindung zwischen der Antriebswelle 5 bzw. deren ovalen Segmenten 51 und dem Brühkammerunterteil 3 löst und der Brühkammerunterteil 3, im Sinne einer Nockenwellenbetätigung, eine Vertikalbewegung auszuführen gezwungen wird.

Sobald sich die Führungszapfen 30 des Brühkammerunterteils 3 vertikal oberhalb des Hebels 65 befinden, dreht sich dieser, der Schwerkraft folgend, nach links und kommt in seiner Ruhestellung an einen zweiten Anschlag 66 zu liegen.

Um während der Aufwärtsbewegung des Brühkammerunterteils 3 ein vertikales Mitbewegen des mit ihm verbundenen Mitnehmerorgans 4 zu ermöglichen, sind die in der äusseren Führungsbahn 63 nach oben verlaufenden Nuten 72 vorgesehen, in welchen die Führungsnocken 45 des Mitnehmerorgans 4 die Hubbewegung mitmachen können. Bei der Aufwärtsbewegung wird der Brühkammerunterteil 3 einerseits grob durch die in den vertikalen Nuten 64 verlaufenden Zapfen 30 geführt; andererseits greifen die an den Innenseiten des Aussenteils 6 angeformten Führungszapfen 69 in die Längsschlitze 36 der Führungsplatten 35 des Brühkammerunterteils 3 ein, wodurch eine genaue Zentrierung des Brühkammerunterteils 3 erreicht wird. Die Längsschlitze 36 sind hierzu nach oben leicht konisch verlaufend ausgebildet.

Die zwei vertikalen, die Antriebswelle 5 umfassenden Führungsstege 34 des Brühkammerunterteils 3 verhindern eine Schwenkbewegung des Brühkammerunterteils 3 während dessen Vertikalbewegung. Die vertikale Hublänge ist so ausgelegt, dass der Brühkammerunterteil 3 dichtend an den Brühkammeroberteil 2 zu liegen kommt. Dadurch wird die eigentliche Brühkammer 17 gebildet und abgeschlossen, und ein Kaffeegetränk kann aufgebrüht werden. Die Kupplungselemente zum Verbinden des im Brühkammerunterteil 3 angeformten Auslasses 38 mit dem eigentlichen Getränkeauslass sind ebenfalls nicht eingezeichnet. Ein weiteres, nicht eingezeichnetes Element ist ein Brühkammereinsatz, der in die Brühmulde 31 des Brühkammerunterteils 3 eingesetzt wird. Ein solcher Einsatz ist vorzugsweise mit radial verlaufenden Schlitzen versehen, welche zentral zusammenlaufen und über den Kanal 37 mit dem Auslass 38 verbunden sind, so dass der Brühwasserdurchtritt durch die Kaffeepulver-Portion begünstigt wird. Da all diese Elemente jedoch an sich bekannt sind, erübrigt sich eine weitergehende Erläuterung.

Ein Weiterdrehen der Antriebswelle 5 bewirkt, dass sich der Brühkammerunterteil 3 wieder nach unten bewegt. Für ein sicheres Hinunterbewegen sind zwei nicht dargestellte Federn vorgesehen, welche am Aussenteil 6 angebracht sind und an den Zapfen 30 des Brühkammerunterteils 3 angreifen, wodurch letzterer, zusätzlich zur Schwerkraft, nach unten gedrückt wird.

Um schliesslich die ausgelaugte Kaffeepulver-Portion auszuwerfen, wird die Antriebswelle 5 weitergedreht. Dadurch verschwenkt sich die Brühmulde 31 des Brühkammerunterteils 3 zusammen mit dem Mitnehmerorgan 4 nach unten. Die beiden Führungsbahnen 62, 63 sind so ausgebildet, dass deren Abstand im Bereich der unteren Totpunkte minimal ist. Dadurch wird erreicht, dass sich das Mitnehmerorgan 4, bei der nach unten gerichteten Drehbewegung, allmählich in die Aussparung des Brühkammerunterteils 3 zurückzieht, so dass die in der Vertiefung 31 des Brühkammerunterteils 3 aufgenommene Kaffeepulver-Portion nicht mehr von den Stiften 46 des Mitnehmerorgans 4 gehalten wird, wodurch sich die Kaffeepulver-Portion, schwerkraftbedingt, sicher aus dieser Vertiefung 31 löst und in den Abfallbehälter 10 fällt.

Eine solchermassen ausgebildete Baugruppe hat den Vorteil, dass sie sehr klein ausfällt, was eine kompakte Baugrösse der Kaffeemaschine zulässt.

Zusammenfassend kann gesagt werden, dass durch eine derartige Kaffeemaschine bzw. Baugruppe vollautomatisch ein Kaffeegetränk aus einer auf einem Transportband angeordneten Kaffeepulver-Portion zubereitet werden kann. Ein Unterschied zu bekannten Kaffeemaschinen und Verfahren besteht darin, dass nur jeweils die für den Aufbrühvorgang benötigte Kaffeepulver-Portion aus dem Behälter entnommen wird. Dadurch bleiben die nicht benötigten Kaffeepulver-Portion im Behälter sicher verpackt und behalten ihr volles Aroma. Um eine Oxydation der im Behälter 12 aufgenommenen Kaffeepulver-Portion zu erschweren, kann der Behälter 12 zusätzlich mit einem Gas schwerer als Luft gefüllt werden.

Ein weiterer Vorteil ist, dass der an der Kaffeemaschine fixierte Behälter jederzeit durch einen anderen Behälter, welcher allenfalls andere Kaffeepulver-Portion, beispielsweise koffeinfreie, enthält, ausgetauscht werden kann. Dazu wäre es auch denkbar, einen Mechanismus vorzusehen, mittels welchem verschiedene Behälter mit allenfalls unterschiedlichen Kaffeepulver-Portion an der Kaffeemaschine befestigt und bei Bedarf zum Einsatz, das heisst, in den Erfassungsbereich des Mitnehmerorgans gebracht werden können. Diese Mechanik könnte beispielsweise aus einer Schiene bestehen, an welcher Befestigungselemente zum Fixieren von mehreren Behältern verschiebbar angeordnet sind.

## Patentansprüche

1. Kaffeemaschine (1) zur Zubereitung eines Kaffeegetränks durch Aufbrühen einer Portion (13) gemahlenen Kaffees in einer aus zwei Teilen (2, 3) bestehenden Brühkammer (17), unter Verwendung einer Mehrzahl von Kaffeepulver-Portionen (13, 13A), die im Abstand zueinander entlang eines Transportbandes (14) angeordnet sind, welches in einem mit einer Öffnung (16) versehenen Behälter (12) aufgenommen ist, dadurch gekennzeichnet, dass der eine Brühkammerteil (3) zum Aufnehmen einer Kaffeepulver-Portion (13, 13A) geeignet ausgebildet, drehbar und längsbeweglich gelagert und mit einem Mitnehmerorgan (4) versehen ist, um einen im Bereich der Öffnung (16) des Behälters (12) fixierten Anfangsbereich (14A, 14B) des Transportbandes (14) formschlüssig zu erfassen und aus dem Behälter (12) herauszuziehen, und dass Mittel zum Durchtrennen des Transportbandes (14) hinter einer vordersten, aus dem Behälter (12) herausgezogenen Kaffeepulver-Portion (13) vorgesehen sind.

2. Kaffeemaschine (1) nach Anspruch 1, dadurch gekennzeichnet, dass ein ortsfester Aussenteil (6) zur Aufnahme und Führung des Mitnehmerorgans (4), des drehbaren Brühkammerteils (3) sowie einer den Brühkammerteil (3) und/oder das Mitnehmerorgan (4) antreibenden Antriebswelle (5) vorgesehen ist, wobei diese Bauteile (3, 4, 5, 6) zu einer Baugruppe (9) zusammengefasst sind.

3. Kaffeemaschine (1) nach Anspruch 2, dadurch gekennzeichnet, dass der Aussenteil (6) zwei Seitenteile (61) aufweist, in welche je zwei Führungsbahnenpaare (62, 63) zur Führung des mit Führungsnocken (45) versehenen Mitnehmerorgans (4) und des mit Führungszapfen (30) versehenen, drehbaren Brühkammerteils (3) eingelassen sind.

4. Kaffeemaschine (1) nach einem der Ansprüche 1 bis 3, dadurch gekennzeichnet, dass die Antriebswelle (5) über eine Formschlussverbindung mit dem drehbaren Brühkammerteil (3) koppelbar ist.

5. Kaffeemaschine (1) nach einem der Ansprüche 1 bis 4, dadurch gekennzeichnet, dass das mit dem drehbaren Brühkammerteil (3) gekoppelte Mitnehmerorgan (4) derart ausgebildet ist, dass es gegenüber letzterem, zusätzlich zur gemeinsamen Drehbewegung, eine Relativbewegung ausführen kann.

6. Kaffeemaschine (1) nach einem der Ansprüche 1 bis 5, dadurch gekennzeichnet, dass das Mitnehmerorgan (4) mit Stiften (46) versehen ist, die in am Transportband (14, 14A) vorhandene Aussparungen einzugreifen bestimmt sind.

7. Kaffeemaschine (1) nach einem der Ansprüche 3 bis 6, dadurch gekennzeichnet, dass das eine Führungsbahnenpaar (62) zur Führung des drehbaren Brühkammerteils (3) zumindest annähernd kreisförmig ausgebildet ist.

8. Kaffeemaschine (1) nach Anspruch 7, dadurch gekennzeichnet, dass das andere Führungsbahnenpaar (63) eine vom zumindest annähernd kreisförmig ausgebildeten Führungsbahnenpaar (62) abweichende, unregelmässige Gestaltung aufweist.

9. Kaffeemaschine (1) nach Anspruch 8, dadurch gekennzeichnet, dass durch die unterschiedlich ausgestalteten Führungsbahnen der beiden Führungsbahnenpaare (62, 63) eine Relativbewegung zwischen dem Mitnehmerorgan (4) und dem unteren Brühkammerteil (3) erreicht ist.

10. Kaffeemaschine (1) nach einem der Ansprüche 7 bis 9, dadurch gekennzeichnet, dass das zumindest annähernd kreisförmige Führungsbahnenpaar (62) im Bereich des oberen Totpunkts jeweils zusätzlich eine vertikal nach oben verlaufende Führungsnut (64) aufweist.

11. Kaffeemaschine (1) nach Anspruch 10, dadurch gekennzeichnet, dass der Aussenteil (6) mit zwei beweglich angebrachten Hebeln (65) versehen ist, welche derart in Wirkverbindung mit dem drehbaren Brühkammerteil (3) bzw. dessen Führungszapfen (30) stehen, dass die Führungszapfen (30) des drehbaren Brühkammerteils (3) am oberen Totpunkt der Führungsbahnen (62) in die vertikalen Führungsnuten (64) geleitet werden.

12. Kaffeemaschine (1) nach einem der Ansprüche 2 bis 11, dadurch gekennzeichnet, dass der drehbare Brühkammerteil (3) als Brühkammerunterteil ausgebildet und dass der andere Brühkammerteil (2) als oberer, fest mit dem Aussenteil (6) verbundener Brühkammerteil ausgebildet ist.

13. Kaffeemaschine (1) nach einem der Ansprüche 2 bis 12, dadurch gekennzeichnet, dass Befestigungsorgane (70, 71) zum positionsbestimmten Ankoppeln des die Kaffeeportionen enthaltenden Transportbandbehälters (12) vorgesehen sind.

14. Kaffeemaschine (1) nach Anspruch 13, dadurch gekennzeichnet, dass die Befestigungsorgane (70, 71) am Aussenteil (6) angeformt sind.

15. Kaffeemaschine (1) nach einem der Ansprüche 1 bis 14, dadurch gekennzeichnet, dass in den drehbaren Brühkammerteil (3) eine Vertiefung (31) zur Aufnahme einer Kaffeeportion (13) eingelassen ist.

16. Kaffeemaschine (1) nach einem der Ansprüche 1 bis 15, dadurch gekennzeichnet, dass die Mittel zum Durchtrennen des Transportbandes (14) ein Durchtrennorgan (32) umfassen.

17. Kaffeemaschine (1) nach Anspruch 16, dadurch gekennzeichnet, dass das Durchtrennorgan (32) als messerförmige Schneidkante ausgebildet ist, welche bevorzugt eine schräge oder dachförmige Form aufweist.

18. Kaffeemaschine (1) nach Anspruch 16 oder 17, dadurch gekennzeichnet, dass das Durchtrennorgan (32) am drehbaren Brühkammerteil (3) angeformt ist.

19. Kaffeemaschine (1) nach einem der Ansprüche 12 bis 18, dadurch gekennzeichnet, dass der obere Brühkammerteil (2) mit einem federvorgespannten Brühwasserzulauf-Ventil (21) versehen ist, welches durch eine im Brühkammerunterteil (3) aufgenommene Kaffeeportion (13), entgegen der Vorspannkraft der Feder (22), betätigbar ist.

20. Kaffeemaschine (1) nach einem der Ansprüche 1 bis 19, dadurch gekennzeichnet, dass diese ferner ein Betätigungsorgan (8) zum zwangsweisen Verschliessen eines am Behälter (12) bewegbar angebrachten Verschlussdeckels (15) aufweist.

21. Kaffeemaschine (1) nach Anspruch 20, dadurch gekennzeichnet, dass das Betätigungsorgan (8) als Verschlussbügel (8) ausgebildet und selbsthemmend angeordnet ist, indem der Verschlussbügel (8) zur Öffnung des Verschlussdeckels (15) während des Erfassens und Bewegens des Transportbandes (14) durch den beweglichen Brühkammerteil (3) betätigt und zwangsweise verschwenkt wird.

22. Kaffeemaschine (1) nach einem der Ansprüche 12 bis 21, dadurch gekennzeichnet, dass auf beiden Aussenseiten des Aussenteils (6), im Bereich der beiden vertikalen Führungsnuten (64), je eine Feder vorgesehen ist, welche den Brühkammerunterteil (3) an dessen Führungszapfen (30) bei der Hubbewegung in Richtung der Schwerkraft belastet, so dass der Brühkammerunterteil (3), bei der Hubbewegung, nach dem Überschreiten des oberen Totpunkts, zusätzlich zur Schwerkraft nach unten gedrückt wird.

23. Kaffeemaschine (1) nach einem der Ansprüche 12 bis 22, dadurch gekennzeichnet, dass am Brühkammerunterteil (3) zumindest ein Impulsgeber (41, 42) angeordnet ist, mittels welchem die Lage des Brühkammerunterteils (3) erfasst wird, um einen mit der Antriebswelle (5) gekoppelten Antriebsmotor anzusteuern.

24. Kaffeemaschine (1) nach Anspruch 23, dadurch gekennzeichnet, dass die Impulsgeber (41, 42) am Brühkammerunterteil (3) zwei unterschiedlich gepolte Magnete sind und am Aussenteil (6) eine bipolare Hallsonde angeordnet ist, so dass zwei Positionen, nämlich eine Brühstellung und eine Ruhestellung des Brühkammerunterteils (3), erkannt und der mit der Antriebswelle (5) gekoppelte Antriebsmotor jeweils gestoppt werden kann, wenn der Brühkammerunterteil (3) die Brüh- bzw. Ruhestellung einnimmt.

25. Verfahren zur Zubereitung eines Kaffeegetränks durch Anwendung einer Kaffeemaschine gemäss einem oder mehreren der Ansprüche 1 bis 24, dadurch gekennzeichnet, dass der jeweilige im Bereich der Behälteröffnung (16) liegende Anfangsabschnitt (14A, 14B) des Transportbandes (14) erfasst und das Transportband (14) so weit aus dem Behälter (12) herausgezogen wird, dass sich lediglich der jeweils die vorderste Kaffeepulver-Portion (13) enthaltende Transportbandabschnitt ausserhalb des Behälters (12) befindet, dass das Transportband (14) hinter der aus dem Behälter (12) entnommenen Kaffeepulver-Portion (13) durchtrennt wird, solange sich die nächstfolgende Kaffeepulver-Portion (13A) noch vollständig im Behälter (12) befindet, dass der abgetrennte Transportbandabschnitt mit der darauf angeordneten Kaffeepulver-Portion (13) in die Brühkammer (17) transportiert wird, und dass danach das Kaffeegetränk aufgebrüht wird.

26. Verfahren nach Anspruch 25, dadurch gekennzeichnet, dass der hinter der entnommenen Kaffeeportion (13) liegende, abgetrennte Transportbandabschnitt in dessen neu entstandenem Anfangsbereich (14B) im Bereich der Behälteröffnung (16) fixiert wird.

27. Verfahren nach Anspruch 25 oder 26, dadurch gekennzeichnet, dass die ausgelaugte Kaffeeportion (13B) nach dem Aufbrühvorgang in einen Abfallbehälter (10) ausgeworfen wird.

## Claims

1. A coffee machine (1) for preparing a coffee beverage by infusing a portion (13) of powdered coffee in an infusion chamber (17) consisting of two parts (2, 3), by using a plurality of coffee powder portions (13, 13A) which are arranged one after the other with a mutual interspacing along a conveyor band (14) that is accommodated in a container (12) provided with an opening (16), characterized in that one part (3) of the infusion chamber is suitably designed for taking up a coffee powder portion (13, 13A), is mounted for rotation and longitudinal displacement and is provided with an entraining element (4) so as to grip with a form fit a starting zone (14A, 14B) of the conveyor band (14) fixed in the zone of the opening (16) of the container (12) and to draw it out of the container (12), and that means are provided for cutting the conveyor band (14) behind a frontmost coffee powder portion (13) drawn out of the container (12).

2. A coffee machine (1) according to claim 1, characterized in that there is provided an outer part (6) fixed in position, for accommodating and guiding the entraining element (4), the rotatable part (3) of the infusion chamber, as well as a drive shaft (5) driving the part (3) of the infusion chamber and/or the entraining element (4), in which arrangement these components (3, 4, 5, 6) are combined into an assembly (9)

3. A coffee machine (1) according to claim 2, characterized in that the outer part (6) has two side parts (61) into which there are let in two pairs (62, 63) of guide paths each, for guiding the entraining element (4) provided with guide cams (45), and the rotatable part (3) of the infusion chamber provided with guide pins (30).

4. A coffee machine (1) according to one of claims 1 to 3, characterized in that the drive shaft (5) can be coupled to the rotatable part (3) of the infusion chamber by means of a connection with a form fit.

5. A coffee machine (1) according to one of claims 1 to 4, characterized in that the entraining element (4) coupled with the rotatable part (3) of the infusion chamber is designed in such a way that it is capable of executing a relative movement in relation to the latter, in addition to the common rotational movement.

6. A coffee machine (1) according to one of claims 1 to 5, characterized in that the entraining element (4) is provided with pins (46) which are intended to engage in recessed portions provided on the conveyor band (14, 14A).

7. A coffee machine (1) according to one of claims 3 to 6, characterized in that one guide path pair (62) is designed to be at least approximately circular, for guiding the rotatable part (3) of the infusion chamber.

8. A coffee machine (1) according to claim 7, characterized in that the other guide path pair (63) has an irregular shape different from the guide path pair (62) designed to be at least approximately circular.

9. A coffee machine (1) according to claim 8, characterized in that a relative movement is obtained between the entraining element (4) and the bottom part (3) of the infusion chamber by means of the differently designed guide paths of the two guide path pairs (62, 63).

10. A coffee machine (1) according to one of claims 7 to 9, characterized in that the guide path pair (62) designed to be at least approximately circular has additionally in each case a guide groove (64) extending vertically upwards in the zone of the upper dead centre.

11. A coffee machine (1) according to claim 10, characterized in that the outer part (6) is provided with two movably mounted levers (65) which are disposed in an operative connection with the rotatable part (3) of the infusion chamber or its guide pins (30), in such a way that the guide pins (30) of the rotatable part (3) of the infusion chamber are guided at the upper dead centre of the guide path (62) into the vertical guide grooves (64).

12. A coffee machine (1) according to one of claims 2 to 11, characterized in that the rotatable part (3) of the infusion chamber is designed as a bottom part of the infusion chamber, and that the other part (2) of the infusion chamber is designed as an upper part of the infusion chamber that is rigidly connected to the outer part (6).

13. A coffee machine (1) according to one of claims 2 to 12, characterized in that fastening elements (70, 71) are provided for the connection in a defined position of the container (12) for the conveyor band containing the coffee portions.

14. A coffee machine (1) according to claim 13, characterized in that the fastening elements (70, 71) are formed on the outer part (6).

15. A coffee machine (1) according to one of claims 1 to 14, characterized in that a recessed portion (31) is let in, into the rotatable part (3) of the infusion chamber for taking up a coffee portion (13).

16. A coffee machine (1) according to one of claims 1 to 15, characterized in that the means for cutting the conveyor band (14) comprise a cutting element (32).

17. A coffee machine (1) according to claim 16, characterized in that the cutter element (32) is formed as a knife-shaped cutter edge which preferably has an oblique or roof-shaped form.

18. A coffee machine (1) according to claim 16 or 17, characterized in that the cutter element (32) is formed on the rotatable part (3) of the infusion chamber.

19. A coffee machine (1) according to one of claims 12 to 18, characterized in that the upper part (2) of the infusion chamber is provided with an intake valve (21) for the infusion water, which is prestressed by a spring, which valve is actuable by a coffee portion (13) taken up in the bottom part (3) of the infusion chamber against the prestressing force of the spring (22).

20. A coffee machine (1) according to one of claims 1 to 19, characterized in that it has, moreover, an actuating element (8) for the constrained closure of a sealing lid (15), movably mounted on the container (12).

21. A coffee machine (1) according to claim 20, characterized in that the actuating element (8) is designed as a closing strap (8) and is arranged to be self-locking, in that for opening the sealing lid (15) during the gripping action and movement of the conveyor band (14), the closing strap (8) is actuated and pivoted in a constrained manner by the movable part (3) of the infusion chamber.

22. A coffee machine (1) according to one of claims 12 to 21, characterized in that on both outer sides of the outer part (6), one spring each is provided in the zone of the two vertical guide grooves (64), which spring loads the bottom part (3) of the infusion chamber at its guide pins (30) during the stroke movement in the direction of the force of gravity, so that the bottom part (3) of the infusion chamber is additionally pushed downwards by gravity during the stroke movement, after the top dead centre has been crossed.

23. A coffee machine (1) according to one of claims 12 to 22, characterized in that on the bottom part (3) of the infusion chamber there is arranged at least one pulse generator (41, 42), by means of which the position of the bottom part (3) of the infusion chamber is detected so as to start a drive motor coupled with the drive shaft (5).

24. A coffee machine (1) according to claim 23, characterized in that the pulse generators (41, 42) on the bottom part (3) of the infusion chamber are two magnets with different polarities, and a bipolar Hall probe is arranged on the outer part (6), so that it is possible to recognize two positions, that is to say, an infusing position and a rest position of the bottom part (3) of the infusion chamber, and that the drive motor coupled with the drive shaft (5) can in each case be stopped when the bottom part (3) of the infusion chamber occupies the infusing or rest position.

25. A method for preparing a coffee beverage by using a coffee machine according to one or more of claims 1 to 24, characterized in that the starting section (14A, 14B) of the conveyor band (14) is gripped which lies at the time in the zone of the container opening (16), and the conveyor band (14) is drawn so far out of the container (12) that only the coffee powder portion (13) that is frontmost at the time is located outside the container (12), that the conveyor band (14) is cut behind the coffee powder portion (13) taken out of the container (12), as long as the next coffee powder portion (13A) is still entirely located in the container (12), that the cut off section of the conveyor band is conveyed into the infusion chamber (17), together with the coffee powder portion (13) arranged thereon, and that thereupon the coffee beverage is infused.

26. A method according to claim 25, characterized in that the cut section of the conveyor band lying behind the taken up coffee portion (13) is fixed in its newly arising starting zone (14B) in the zone of the container opening (16).

27. A method according to claim 25 or 26, characterized in that the leached out coffee portion (13B) is ejected into a refuse container (10) after the infusion process.

## Revendications

1. Machine à café (1) pour préparer un café par infusion d'une portion (13) de café moulu dans une chambre d'infusion (17) comprenant deux parties (2, 3) avec utilisation d'un grand nombre de portions de café en poudre (13, 13A) qui sont disposées à distance les unes des autres le long d'une bande transporteuse (14), laquelle est logée dans un récipient (12) doté d'une ouverture (16), caractérisée en ce que la une partie de la chambre d'infusion (3) est conçue de façon appropriée pour recevoir une portion de café en poudre (13, 13A), est logée de façon pivotante et mobile dans le sens de la longueur et est dotée d'un organe d'entraînement (4) afin de saisir mécaniquement une zone initiale (14A, 14B), fixée dans la zone de l'ouverture (16) du récipient (12), de la bande transporteuse (14) et de la sortir en tirant du récipient (12) et en ce que des moyens pour la séparation de la bande transporteuse (14) sont prévus derrière une portion de café en poudre (13) la plus avancée et sortie du récipient (12).

2. Machine à café (1) selon la revendication 1, caractérisée en ce qu'une partie extérieure (6) fixe est prévue pour le logement et le guidage de l'organe d'entraînement (14) de la partie pivotante de la chambre d'infusion (3) et d'un arbre d'entraînement (5) entraînant la partie de chambre d'infusion (3) et/ou l'organe d'entraînement (4), ces composants (3, 4, 5, 6) étant regroupés en un seul ensemble (9).

3. Machine à café (1) selon la revendication 2, caractérisée en ce que la partie extérieure (6) présente deux parties latérales (61) dans chacune desquelles sont encastrées deux paires de glissières (62, 63) pour le guidage de l'organe d'entraînement (4) prévu avec des cames de guidage (45) et de la partie de chambre d'infusion (3) dotée de tenons de guidage (30) et pivotante.

4. Machine à café (1) selon l'une quelconque des revendications 1 à 3, caractérisée en ce que l'arbre d'entraînement (5) peut être couplé par un assemblage mécanique avec la partie pivotante de la chambre d'infusion (3).

5. Machine à café (1) selon l'une quelconque des revendications 1 à 4, caractérisée en ce que l'organe d'entraînement (4) couplé avec la partie pivotante de la chambre d'infusion (3) est conçu de telle façon qu'il puisse exécuter un déplacement relatif par rapport à celle-ci, en supplément du mouvement de rotation commun.

6. Machine à café (1) selon l'une quelconque des revendications 1 à 5, caractérisée en ce que l'organe d'entraînement (4) est pourvu de goupilles (46) qui sont destinées à s'engager dans des évidements existants sur la bande transporteuse (14,14A).

7. Machine à café (1) selon l'une quelconque des revendications 3 à 6, caractérisée en ce que la une paire de glissières (62) pour le guidage de la partie pivotante de la chambre d'infusion (3) a une conception au moins approximativement circulaire.

8. Machine à café (1) selon la revendication 7, caractérisée en ce que l'autre paire de glissières (63) présente une conception irrégulière et différente de la paire de glissières (62) se présentant sous une forme au moins approximativement circulaire.

9. Machine à café (1) selon la revendication 8, caractérisée en ce qu'un déplacement relatif entre l'organe d'entraînement (4) et la partie inférieure de la chambre d'infusion (3) est obtenu par les glissières différemment conçues des deux paires de glissières (62, 63).

10. Machine à café (1) selon l'une quelconque des revendications 7 à 9, caractérisée en ce que la paire de glissières (62) au moins approximativement circulaire présente dans la zone du point mort haut respectivement en supplément une rainure de guidage (64) allant verticalement vers le haut.

11. Machine à café (1) selon la revendication 10, caractérisée en ce que la partie extérieure (6) est pourvue de deux leviers (65) disposés de façon mobile qui sont en liaison active avec la partie pivotante de la chambre d'infusion (3) ou son tenon de guidage (30) de telle manière que les tenons de guidage (30) de la partie pivotante de la chambre d'infusion (3) soient guidés au point mort haut des glissières (62) dans les rainures de guidage (64) verticales.

12. Machine à café (1) selon l'une quelconque des revendications 2 à 11, caractérisée en ce que la partie pivotante de la chambre d'infusion (3) est réalisée comme la partie inférieure de la chambre d'infusion et en ce que l'autre partie de chambre d'infusion (2) est réalisée comme la partie supérieure de la chambre d'infusion et reliée fixement à la partie extérieure (6).

13. Machine à café (1) selon l'une quelconque des revendications 2 à 12, caractérisée en ce que des organes de fixation (70, 71) sont prévus pour l'accouplement indexé du récipient pour bande transporteuse (12) contenant les portions de café.

14. Machine à café (1) selon la revendication 13, caractérisée en ce que les organes de fixation (70, 71) sont formés sur la partie extérieure (6).

15. Machine à café (1) selon l'une quelconque de revendications 1 à 14, caractérisée en ce qu'une cavité (31) est encastrée dans la partie pivotante de la chambre d'infusion (3) pour recevoir une portion de café (13).

16. Machine à café (1) selon l'une quelconque des revendications 1 à 15, caractérisée en ce que les moyens pour la séparation de la bande transporteuse (14) comportent un organe de séparation (32).

17. Machine à café (1) selon la revendication 16, caractérisée en ce que l'organe de séparation (32) est conçu comme une arête coupante en forme de couteau qui présente de préférence une forme inclinée ou en forme de toit.

18. Machine à café (1) selon la revendication 16 ou 17, caractérisée en ce que l'organe de séparation (32) est formé sur la partie pivotante de la chambre d'infusion (3).

19. Machine à café (1) selon l'une quelconque des revendications 12 à 18, caractérisée en ce que la partie supérieure de la chambre d'infusion (2) est dotée d'une soupape pour l'arrivée de l'eau d'infusion (21), prétendue par un ressort, qui peut être actionnée au moyen d'une portion de café (13) réceptionnée dans la partie inférieure de la chambre d'infusion (3) dans le sens contraire à la force de prétension du ressort (22).

20. Machine à café (1) selon l'une quelconque des revendications 1 à 19, caractérisée en ce que celle-ci présente également un organe de commande (8) pour la fermeture forcée d'un couvercle de fermeture disposé de façon mobile sur le récipient (12).

21. Machine à café (1) selon la revendication 20, caractérisée en ce que l'organe de commande (8) est conçu comme une bride de fermeture (8) et disposé de façon autobloquante, si la bride de fermeture (8) est actionnée et pivotée de force par la partie mobile de la chambre d'infusion (3) pour l'ouverture du couvercle de fermeture (15) pendant la saisie et le déplacement de la bande transporteuse (14).

22. Machine à café (1) selon l'une quelconque des revendications 12 à 21, caractérisée en ce que sur chacun des deux côtés extérieurs de la partie extérieure(6), dans la zone des deux rainures de guidage (64) verticales, il est prévu un ressort qui sollicite la partie inférieure de la chambre d'infusion (3) sur son tenon de guidage (30) lors du mouvement ascensionnel dans le sens de la force de pesanteur, de sorte que la partie inférieure de la chambre d'infusion (3) est appuyée vers le bas en supplément de la pesanteur, lors du mouvement ascensionnel et après le dépassement du point mort haut.

23. Machine à café (1) selon l'une quelconque des revendications 12 à 22, caractérisée en ce que sur la partie inférieure de la chambre d'infusion (3) est disposé au moins un générateur d'impulsion (41, 42) au moyen duquel on détecte la position de la partie inférieure de la chambre d'infusion (3) afin d'amorcer un moteur d'entraînement couplé à l'arbre d'entraînement (5).

24. Machine à café (1) selon la revendication 23, caractérisée en ce que les générateurs d'impulsion (41, 42) sur la partie inférieure de la chambre d'infusion (3) sont deux éléments à polarité différente et une sonde bipolaire de Hall est disposée sur la partie extérieure (6), de sorte que deux positions, à savoir une position d'infusion et une position de repos de la partie inférieure de la chambre d'infusion (3), sont reconnues et le moteur d'entraînement couplé à l'arbre d'entraînement (5) peut être stoppé respectivement lorsque la partie inférieure de la chambre d'infusion (3) occupe la position d'infusion / la position de repos.

25. Procédé pour préparer un café en utilisant une machine à café selon l'une ou plusieurs des revendications 1 à 24, caractérisé en ce que la section initiale (14A, 14B) respective, se trouvant dans la zone de l'ouverture du récipient (16), de la bande transporteuse (14) est détectée et la bande transporteuse (14) est sortie du récipient (12) jusqu'à ce que seule la section de bande transporteuse contenant respectivement la portion de café en poudre (13) la plus avancée se trouve à l'extérieur du récipient (12), en ce que la bande transporteuse (14) est séparée derrière la portion de café en poudre (13) prélevée dans le récipient (12), aussi longtemps que la portion de café en poudre (13A) suivante se trouve encore complètement dans le récipient (12), en ce que la section de bande transporteuse séparée avec la portion de café en poudre (13) disposée dessus est transportée dans la chambre d'infusion (17) et en ce que le café est ensuite infusé.

26. Procédé selon la revendication 25, caractérisé en ce que la section de bande transporteuse séparée et se trouvant derrière la portion de café (13) prélevée est fixée dans sa zone initiale (14B) nouvellement formée dans la zone de l'ouverture du récipient (16).

27. Procédé selon la revendication 25 ou 26, caractérisé en ce que la portion de café (13B) macérée est éjectée après l'opération d'infusion dans un récipient à déchets (10).
